# EUROPEAN PATENT SPECIFICATION

(11) **EP 3 898 555 B1**
(45) Date of publication and mention of the grant of the patent: **28.02.2024**
(21) Application number: 19831717.4
(22) Date of filing: 20.12.2019
(51) Int. Cl.: C05C 1/00, C05C 5/04, C05C 7/00, C05C 9/00, C05G 3/90

(54) **PROCESS FOR OBTAINING A FERTILIZER COMPOSITION COMPRISING A DMPSA NITRIFICATION INHIBITOR VIA ADDING DMPSA SALTS INTO THE FERTILIZER MELT**
VERFAHREN ZUR HERSTELLUNG EINER DÜNGEMITTELZUSAMMENSETZUNG MIT EINEM DMPSA-NITRIFIKATIONSINHIBITOR DURCH ZUGABE VON DMPSA SALZEN IN DIE DÜNGESCHMELZE
PROCÉDÉ D'OBTENTION D'UNE COMPOSITION D'ENGRAIS COMPRENANT UN INHIBITEUR DE NITRIFICATION AU DMPSA PAR AJOUT DE SELS DE DMPSA DANS LA MASSE FONDUE D'ENGRAIS

(30) Priority: 21.12.2018 EP 18215085
(43) Date of publication of application: 27.10.2021
(60) Divisional application: 23210145.1
(73) Proprietor: BASF SE, 67056 Ludwigshafen am Rhein (DE)
(72) Inventor: STAAL, Maarten, 67117 Limburgerhof (DE); THIEL, Uwe, 67117 Limburgerhof (DE); SCHMID, Markus, 67117 Limburgerhof (DE); ZERULLA, Wolfram, 67487 St Martin (DE); PASDA, Gregor, 67117 Limburgerhof (DE); SCHNEIDER, Karl-Heinrich, 67117 Limburgerhof (DE); FROEHLING, Peter, 67117 Limburgerhof (DE)
(74) Representative: BASF IP Association
(86) International application number: PCT/EP2019/086526
(87) International publication number: WO 2020/127870

(56) References cited:
- EP-A1- 3 109 223
- CN-A- 106 673 828
- HUÉRFANO XIMENA ET AL: "The new nitrification inhibitor 3,4-dimethylpyrazole succinic (DMPSA) as an alternative to DMPP for reducing N2O emissions from wheat crops under humid Mediterranean conditions", EUROPEAN JOURNAL OF AGRONOMY, ELSEVIER, AMSTERDAM, NL, vol. 80, 20 July 2016 (2016-07-20), pages 78-87, XP029713844, ISSN: 1161-0301, DOI: 10.1016/J.EJA.2016.07.001

## Description

The present invention relates to a process for obtaining a fertilizer composition comprising a DMPSA nitrification inhibitor via adding DMPSA salts into the fertilizer melt Nitrogen is an essential element for plant growth and reproduction. About 25% of the plant-available nitrogen in soils (ammonium and nitrate) originates from decomposition processes (mineralization) of organic nitrogen compounds such as humus, plant and animal residues and organic fertilizers. Approximately 5% derive from rainfall. On a global basis, the biggest part (70%), however, are supplied to the plant by inorganic nitrogen fertilizers. Without the use of nitrogen fertilizers, the earth would not be able to support its current population.

Soil microorganisms convert organic nitrogen to ammonium (NH₄⁺) which is subsequently oxidized to nitrate (N0₃⁻) in a process known as nitrification. Albeit very important for agriculture, nitrate is highly mobile in the soil and may be readily lost from soils by leaching to ground water. Nitrogen is further lost by microbiological denitrification to gaseous forms of nitrogen. As a result of the various losses, approximately 50% of the applied nitrogen is lost during the year following fertilizer addition (cf. Nelson and Huber; Nitrification inhibitors for corn production (2001), National Corn Handbook, Iowa State University).

Nitrification inhibitors such as pyrazole compounds can be used in order to reduce nitrification and consequently increase fertilization efficacy and decrease nitrogen levels in the groundwater and surface waters and nitrogen oxide levels in the atmosphere. A problem associated with the use of pyrazole compounds is their volatility, which results in losses of the nitrification inhibitor during storage. In order to address this problem, pyrazole derivatives with hydrophilic groups have been described in the prior art.

WO 96/24566 describes methods of producing low-volatile pyrazole derivatives with hydrophilic groups such as 2-(3-methyl-1H-pyrazole-1-yl) succinic acid to be used as nitrification inhibitors.

WO 2011/032904 and WO 2013/121384 describe 2-(3,4-dimethyl-1H-pyrazole-1-yl) succinic acid as nitrification inhibitor.

WO 2015/086823 relates inter alia to a fertilizer mixture and a formulation comprising 2-(3,4-dimethyl-1H-pyrazole-1-yl) succinic acid. WO 2015/086823 discloses that the granules of mineral fertilizers, preferably calcium ammonium nitrate mineral fertilizers, are coated or impregnated with 2-(N-3, 4-dimethylpyrazole)succinic acid by being sprayed with a solution of the nitrification inhibitor and dried again. In case of liquid calcium ammonium nitrate (CAN) fertilizers, WO 2015/086823 discloses that the 2-(3,4-dimethyl-1H-pyrazole-1-yl) succinic acid can also be directly added to liquid CAN fertilizers. EP 3 109 223 discloses a mixture for treating urea-containing fertilizers comprising as component A a (thio) phosphoric triamide and as component B, 2-(N-3,4-dimethylpyrazole)succinic acid.

However, the processes described in the prior art for obtaining a fertilizer composition comprising 2-(3,4-dimethyl-1H-pyrazole-1-yl) succinic acid may have the disadvantage that the production of the fertilizer composition is not homogenous, is rather complex, requires additional steps or apparatuses, or is not integrated into the fertilizer production process.

Thus, it is one of the objects of the present invention to provide a process for obtaining a fertilizer composition comprising a potassium or ammonium or diammonium salt of DMPSA nitrification inhibitor which yields a homogenous fertilizer composition, is rather simple, and is fully integrated into the fertilizer production process.

Another object of the present invention is to provide a process for obtaining a fertilizer composition comprising a potassium or ammonium or diammonium salt of DMPSA nitrification inhibitor which has a long storage stability regarding the DMPSA, e.g. under different temperature conditions.

It has surprisingly been found that the above objects of the present invention can be achieved by the processes of the present invention as described herein.

Then present invention relates to a process for obtaining
a fertilizer composition comprising
(i) at least one nitrogen-containing fertilizer (F); and
(ii) a nitrification inhibitor (N) selected from the group consisting of an ammonium salt, a potassium salt and/or a diammonium salt of 2-(3,4-dimethyl-1H-pyrazol-1-yl)succinic acid and/or 2-(4,5-dimethyl-1H-pyrazol-1-yl)succinic acid, comprising the steps:
   a) melting the fertilizer (F), and/or providing a melt of the fertilizer (F), and
   b) adding the nitrification inhibitor (N) to the melt of the fertilizer (F).

As used herein, the term "2-(dimethyl-1H-pyrazole-1-yl) succinic acid" (also abbreviated as DMPSA in the following) preferably refers to 2-(3,4-dimethyl-1H-pyrazole-1-yl) succinic acid, 2-(4,5-dimethyl-1H-pyrazole-1-yl) succinic acid, or a combination thereof. It is to be understood that the 2-(dimethyl-1H-pyrazole-1-yl) succinic acid salt may be present in the compositions of the invention in deprotonated form, so that the corresponding hydrogen succinate (mono-anion) or succinate (di-anion) is formed.
"wt.-%" means "percent by weight.

"Melting" means changing the state of matter from solid state to liquid state, by heating the solid to a temperature above or close to its melting point and/or by mixing the solid with liquids, e.g. to create a slurry.

A temperature "close to its melting point" means a temperature of not more than 30°C, more preferably not more than 20°C, most preferably not more than 15°C, particularly preferably not more than 10°C, particularly not more than 5°C below the corresponding melting point.

The melting of fertilizer (F) can be achieved by heating fertilizer (F) above or close to its melting point and/or by mixing the solid with liquids, e.g. to create a slurry. In a preferred embodiment, the melting step is considered to be completed if at least 40 wt.-%, more preferably at least 50 wt.-%, most preferably at least 60 wt.-%, particularly preferably at least 70 wt.-%, particularly more preferably at least 80 wt.-%, particularly most preferably at least 90 wt.-%, particularly at least 95 wt.-% of fertilizer (F) is present in the liquid state. In a preferred embodiment, a melt of fertilizer (F) is considered to be provided if at least 40 wt.-%, more preferably at least 50 wt.-%, most preferably at least 60 wt.-%, particularly preferably at least 70 wt.-%, particularly more preferably at least 80 wt.-%, particularly most preferably at least 90 wt.-%, particularly at least 95 wt.-% of fertilizer (F) is present in the liquid state.

The above steps a) and/or b) is/are preferably carried out at temperatures of 80°C to 200°C, more preferably at temperatures of 90°C to 190°C, most preferably at temperatures of 100°C to 180°C, particularly preferably at temperatures of 110°C to 170°C, particularly more preferably at temperatures of 120°C to 160°C, particularly at temperatures of 130°C to 150°C. In a preferred embodiment of the present invention, the above steps a) and/or b) are carried out at a temperature of more than 80°C, more preferably more than 90°C, most preferably more than 100°C, particularly more than 110°C, particularly preferably more than 120°C. In another preferred embodiment of the present invention, the above steps a) and/or b) are carried out at a temperature above the melting point of the fertilizer (F). In another preferred embodiment of the present invention, the above steps a) and/or b) are carried out at a temperature close to the melting point of the fertilizer (F). In another preferred embodiment of the present invention, the above steps a) and/or b) are carried out at a temperature of not more than 30°C, more preferably not more than 20°C, most preferably not more than 15°C, particularly preferably not more than 10°C, particularly not more than 5°C below the melting point of the fertilizer (F).

Optionally, in a preferred embodiment of the present invention, especially in case the above steps a) and/or b) are carried out at a temperature below the melting point of the fertilizer (F), an additional amount of liquid, preferably water, is added to the fertilizer (F) in the above step a), particularly to enable melting. If added, the additional amount of liquid, preferably water, is preferably 0.1 to 15 wt.-%, more preferably 0.5 to 10 wt.-%, most preferably 1 to 9 wt.-%, particularly preferably 2 to 8 wt.-%, particularly more preferably 3 to 7 wt.-%, particularly 4 to 6 wt.-% relative to the total amount of the fertilizer (F).

Optionally, in a preferred embodiment of the present invention, the process comprises after step b) the step c): solidifying the melt of the fertilizer (F) comprising the nitrification inhibitor (N).

"Solidifying" means changing the state of matter from liquid state to solid state, either by cooling down below the melting point and/or by removing liquids, e.g. via evaporating.

The solidifying of the fertilizer (F) can be achieved by cooling down. The solidifying step is considered to be completed if at least 40 wt.-%, more preferably at least 50 wt.-%, most preferably at least 60 wt.-%, particularly preferably at least 70 wt.-%, particularly more preferably at least 80 wt.-%, particularly most preferably at least 90 wt.-%, particularly at least 95 wt.-% of the melt of the fertilizer (F) comprising the nitrification inhibitor (N) is present in the solid state.

The nitrification inhibitor (N) is used in technical grade or preferably with a purity frrom 80 to 100 wt%, more preferably from 90 to 100 wt%, most preferably from 95 to 100 wt%.

In an embodiment of the present invention, the nitrification inhibitor (N) is the ammonium salt of 2-(3,4-dimethyl-1H-pyrazol-1-yl)succinic acid and/or 2-(4,5-dimethyl-1H-pyrazol-1-yl)succinic acid.

In an embodiment of the present invention, the nitrification inhibitor (N) is the potassium salt of 2-(3,4-dimethyl-1H-pyrazol-1-yl)succinic acid and/or 2-(4,5-dimethyl-1H-pyrazol-1-yl)succinic acid.

In an embodiment of the present invention, the nitrification inhibitor (N) is the diammonium salt of 2-(3,4-dimethyl-1H-pyrazol-1-yl)succinic acid and/or 2-(4,5-dimethyl-1H-pyrazol-1-yl)succinic acid.

The fertilizer composition preferably contains 10 to 100000 ppm by weight, more preferably 100 to 10000 ppm by weight, most preferably 0.03 to 0.5 wt.-%, particularly 0.05 to 0.2 wt.-% DMPSA or a salt thereof, which preferably is largely homogenous distributed in the fertilizer composition.

Preferably, the residence time of the nitrification inhibitor (N) in the melt of the nitrogen-containing fertilizer (F) is adjusted in such a way that at least 70 wt.-%, more preferably at least 75 wt.-%, most preferably at least 80 wt.-%, particularly preferably at least 85 wt.-%, particularly at least 90 wt.-% of the nitrification inhibitor (N) as added in step b) is still present in the fertilizer composition.

Preferably, the residence time of the nitrification inhibitor (N) in the melt of the nitrogen-containing fertilizer (F) is not more than 19 minutes, more preferably not more than 15 minutes, most preferably not more than 12 minutes, particularly preferably not more than 10 minutes, particularly more preferably not more than 8 minutes, particularly most preferably not more than 7 minutes, particularly not more than 6 minutes, for instance not more than 5 minutes, for instance preferably not more than 4 minutes, for instance more preferably not more than 3 minutes, for instance most preferably not more than 2 minutes, for example not more than 1 minute.

The term "fertilizers" is to be understood as chemical compounds applied to promote plant and fruit growth. Fertilizers are typically applied either through the soil (for uptake by plant roots), through soil substituents (also for uptake by plant roots), or by foliar feeding (for uptake through leaves). The term also includes mixtures of one or more different types of fertilizers as mentioned below.

The term "fertilizers" can be subdivided into several categories including: a) organic fertilizers (composed of plant/animal matter), b) inorganic fertilizers (composed of chemicals and minerals) and c) urea-containing fertilizers.

Organic fertilizers include manure, e.g. liquid manure, semi-liquid manure, biogas manure, stable manure or straw manure, slurry, liquid dungwater, sewage sludge, worm castings, peat, seaweed, compost, sewage, and guano. Green manure crops (cover crops) are also regularly grown to add nutrients (especially nitrogen) to the soil. Manufactured organic fertilizers include e.g. compost, blood meal, bone meal and seaweed extracts. Further examples are enzyme digested proteins, fish meal, and feather meal. The decomposing crop residue from prior years is another source of fertility.

Inorganic fertilizers are usually manufactured through chemical processes (such as e.g. the Haber-Bosch process), also using naturally occurring deposits, while chemically altering them (e.g. concentrated triple superphosphate). Naturally occurring inorganic fertilizers include Chilean sodium nitrate, mine rock phosphate, limestone, sulfate of potash, muriate of potash, and raw potash fertilizers.

Typical solid fertilizers are in a crystalline, prilled or granulated form. Typical nitrogen containing inorganic fertilizers are ammonium nitrate, calcium ammonium nitrate, ammonium sulfate, ammonium sulfate nitrate, calcium nitrate, diammonium phosphate, monoammonium phosphate, ammonium thio sulfate and calcium cyanamide.

The inorganic fertilizer may be an NPK fertilizer. "NPK fertilizers" are inorganic fertilizers formulated in appropriate concentrations and combinations comprising the three main nutrients nitrogen (N), phosphorus (P) and potassium (K) as well as typically S, Mg, Ca, and trace elements. "NK fertilizers" comprise the two main nutrients nitrogen (N) and potassium (K) as well as typically S, Mg, Ca, and trace elements. "NP fertilizers" comprise the two main nutrients nitrogen (N) and phosphorus (P) as well as typically S, Mg, Ca, and trace elements.

Urea-containing fertilizer may, in specific embodiments, be formaldehyde urea, UAN, urea sulfur, stabilized urea, urea based NPK-fertilizers, or urea ammonium sulfate. Also envisaged is the use of urea as fertilizer. In case urea-containing fertilizers or urea are used or provided, it is particularly preferred that urease inhibitors as defined herein above may be added or additionally be present, or be used at the same time or in connection with the urea-containing fertilizers.

Fertilizers may be provided in any suitable form, e.g. as coated or uncoated granules, in liquid or semi-liquid form, as sprayable fertilizer, or via fertigation etc.

Coated fertilizers may be provided with a wide range of materials. Coatings may, for example, be applied to granular or prilled nitrogen (N) fertilizer or to multi-nutrient fertilizers. Typically, urea is used as base material for most coated fertilizers. The present invention, however, also envisages the use of other base materials for coated fertilizers, any one of the fertilizer materials defined herein. In certain embodiments, elemental sulfur may be used as fertilizer coating. The coating may be performed by spraying molten S over urea granules, followed by an application of sealant wax to close fissures in the coating. In a further embodiment, the S layer may be covered with a layer of organic polymers, preferably a thin layer of organic polymers. In another embodiment, the coated fertilizers are preferably physical mixtures of coated and non-coated fertilizers.

Further envisaged coated fertilizers may be provided by reacting resin-based polymers on the surface of the fertilizer granule. A further example of providing coated fertilizers includes the use of low permeability polyethylene polymers in combination with high permeability coatings.

In specific embodiments, the composition and/or thickness of the fertilizer coating may be adjusted to control, for example, the nutrient release rate for specific applications. The duration of nutrient release from specific fertilizers may vary, e.g. from several weeks to many months.

Coated fertilizers may be provided as controlled release fertilizers (CRFs). In specific embodiments these controlled release fertilizers are fully coated N-P-K fertilizers, which are homogenous and which typically show a pre-defined longevity of release. In further embodiments, the CRFs may be provided as blended controlled release fertilizer products which may contain coated, uncoated and/or slow release components. In certain embodiments, these coated fertilizers may additionally comprise micronutrients. In specific embodiments these fertilizers may show a pre-defined longevity, e.g. in case of N-P-K fertilizers.

Additionally, envisaged examples of CRFs include patterned release fertilizers. These fertilizers typically show a pre-defined release patterns (e.g. hi/standard/lo) and a pre-defined longevity. In exemplary embodiments fully coated N-P-K, Mg and micronutrients may be delivered in a patterned release manner.

Also envisaged are double coating approaches or coated fertilizers based on a programmed release.

In further embodiments, the fertilizer mixture may be provided as, or may comprise or contain a slow release fertilizer. The fertilizer may, for example, be released over any suitable period of time, e.g. over a period of 1 to 5 months, preferably up to 3 months. Typical examples of ingredients of slow release fertilizers are IBDU (isobutylidenediurea), e.g. containing about 31-32 % nitrogen, of which 90% is water insoluble; or UF, i.e. an urea-formaldehyde product which contains about 38 % nitrogen of which about 70 % may be provided as water insoluble nitrogen; or CDU (crotonylidene diurea) containing about 32 % nitrogen; or MU (methylene urea) containing about 38 to 40% nitrogen, of which 25-60 % is typically cold water insoluble nitrogen; or MDU (methylene diurea) containing about 40% nitrogen, of which less than 25 % is cold water insoluble nitrogen; or MO (methylol urea) containing about 30% nitrogen, which may typically be used in solutions; or DMTU (diimethylene triurea) containing about 40% nitrogen, of which less than 25% is cold water insoluble nitrogen; or TMTU (tri methylene tetraurea), which may be provided as component of UF products; or TMPU (tri methylene pentaurea), which may also be provided as component of UF products; or UT (urea triazone solution) which typically contains about 28 % nitrogen. The fertilizer mixture may also be long-term nitrogen-bearing fertiliser containing a mixture of acetylene diurea and at least one other organic nitrogen-bearing fertilizer selected from methylene urea, isobutylidene diurea, crotonylidene diurea, substituted triazones, triuret or mixtures thereof.

Any of the above mentioned fertilizers or fertilizer forms may suitably be combined. For instance, slow release fertilizers may be provided as coated fertilizers. They may also be combined with other fertilizers or fertilizer types. The same applies to the presence of the composition of the present invention, which may be adapted to the form and chemical nature of the fertilizer and accordingly be provided such that its release accompanies the release of the fertilizer, e.g. is released at the same time or with the same frequency.

Preferably, the nitrogen-containing fertilizer (F) is selected from the group consisting of ammonium nitrate, calcium ammonium nitrate, ammonium sulfate, ammonium sulfate nitrate, calcium nitrate, diammonium phosphate, monoammonium phosphate, ammonium thiosulfate, calcium cyanamide, NPK fertilizers, NK fertilizers, NP fertilizers, and urea. More preferably, the nitrogen-containing fertilizer (F) is selected from the group consisting of ammonium nitrate, calcium ammonium nitrate, ammonium sulfate, ammonium sulfate nitrate, and NPK fertilizers. Most preferably, the nitrogen-containing fertilizer (F) is selected from the group consisting of calcium ammonium nitrate, ammonium sulfate, and ammonium sulfate nitrate.

In a preferred embodiment of the present invention, the nitrogen-containing fertilizer (F) is ammonium nitrate.

In a preferred embodiment of the present invention, the nitrogen-containing fertilizer (F) is calcium ammonium nitrate.

In a preferred embodiment of the present invention, the nitrogen-containing fertilizer (F) is ammonium sulfate.

In a preferred embodiment of the present invention, the nitrogen-containing fertilizer (F) is ammonium sulfate nitrate.

In a preferred embodiment of the present invention, the nitrogen-containing fertilizer (F) is calcium nitrate.

In a preferred embodiment of the present invention, the nitrogen-containing fertilizer (F) is diammonium phosphate.

In a preferred embodiment of the present invention, the nitrogen-containing fertilizer (F) is monoammonium phosphate.

In a preferred embodiment of the present invention, the nitrogen-containing fertilizer (F) is ammonium thio sulfate.

In a preferred embodiment of the present invention, the nitrogen-containing fertilizer (F) is calcium cyanamide.

In a preferred embodiment of the present invention, the nitrogen-containing fertilizer (F) is an NPK fertilizer.

In a preferred embodiment of the present invention, the nitrogen-containing fertilizer (F) is an NK fertilizer.

In a preferred embodiment of the present invention, the nitrogen-containing fertilizer (F) is an NP fertilizer.

In a preferred embodiment of the present invention, the nitrogen-containing fertilizer (F) is urea.

### Examples

The present invention is illustrated by the below Example 1 and Example 2.

### Materials

- ASN: Ammonium sulfate nitrate fertilizer from Eurochem
- 15-5-20: 15-5-20S+2 Nitrophoska perfekt fertilizer from Eurochem
- DMPSA solid
- DMPSA-K formulation: Solid DMPSA was added to an aqueous KOH solution so that finally a solution of DMPSA potassium salt with pH 8.0 and a concentration of 36% DMPSA acid equivalents is obtained.
- DMPSA-NH4 formulation: Solid DMPSA was added to an aqueous NH3 solution so that finally a solution of DMPSA ammonium salt with pH 7.6 and a concentration of 41% DMPSA acid equivalents is obtained.

### Example 1

500 g ASN + 20 ml water was added to a metal pan and heated to 135 °C +/- 5°C under continuous stirring using a overhead stirrer. After all ASN was molten, the respective amount of DMPSA formulation was added under continuous stirring. After 1, 5, 10 and 15 minutes, ~60 g sample was taken and poured into an aluminum tray and let cool down at room temperature for 30 min. Afterwards, the sample was crushed into small pieces using a mortar. 2 x 15 g sample, each dissolved in 100 mL water, were analyzed using HPLC method DIN EN 17090 and the measured a.i. concentrations were averaged. The results in Table 1 show that DMPSA and DMPSA formulations can be added to the ASN melt as long as the residence time in the melt is less than 5 minutes. At longer residence times, both NH4 and K formulations are more stable compared to DMPSA solid.

**Table 1**

| | | | Amount added to ASN melt | | Amount DMPSA measured (wt% based on total mixture) in samples taken at different points in time | | |
|---|---|---|---|---|---|---|---|
| | Formulation | | Formulation (g) | Active ingredient (wt% based on total mixture) | 5 min | 10 min | 15 min |
| EXP1-1 | DMPSA powder | | 0,91 | 0,18 | 0,17 | 0,12 | 0,06 |
| EXP1-2 | DMPSA-K | | 2,50 | 0,18 | 0,16 | 0,15 | 0,11 |
| EXP1-3 | DMPSA-NH4 | | 2,25 | 0,18 | 0,17 | 0,17 | 0,16 |
| | | | | | | | |

| DMPSA recovery (wt%) in samples taken at different points in time | | | | | | | |
|---|---|---|---|---|---|---|---|
| 5 min | 10 min | 15 min | | | | | |
| 93 | 66 | 33 | | | | | |
| 91 | 82 | 63 | | | | | |
| 93 | 94 | 86 | | | | | |

### Example 2

500 g 15-5-20 NPK fertilizer + 30 ml water was added to a metal pan and heated to 135 °C +/-5°C under continuous stirring using a overhead stirrer. After all fertilizer was molten, the respective amount of DMPSA formulation was added under continuous stirring. After 1, 5, 10 and 15 minutes, ~60 g sample was taken and poured into an aluminum tray and let cool down at room temperature for 30 min. Afterwards, the sample was crushed into small pieces using a mortar. 2 x 15 g sample, each dissolved in 100 mL water, were analyzed using HPLC method DIN EN 17090 and the measured a.i. concentrations were averaged. The results in Table 2 show that DMPSA and DMPSA formulations can be added to the 15-5-20 melt as long as the residence time in the melt is less than 5 minutes. At longer residence times, both NH4 and K formulations are more stable compared to DMPSA solid.

**Table 2**

| | | | Amount added to 15-5-20 melt | | | Amount DMPSA measured (wt% based on total mixture) in samples taken at different points in time | | |
|---|---|---|---|---|---|---|---|---|
| | Formulation | | Formulation (g) | | Active ingredient (wt% based on total mixture) | 5 min | 10 min | 15 min |
| EXP2-1 | DMPSA powder | | 0,41 | | 0,08 | 0,07 | 0,06 | 0,03 |
| EXP2-2 | DMPSA-K | | 1,11 | | 0,08 | 0,08 | 0,07 | 0,06 |
| EXP2-3 | DMPSA-NH₄ | | 1,04 | | 0,09 | 0,08 | 0,08 | 0,07 |
| | | | | | | | | |

| DMPSA recovery (wt%) in samples taken at different points in time | | | | | | | | |
|---|---|---|---|---|---|---|---|---|
| 5 min | 10 min | 15 min | | | | | | |
| 91 | 78 | 41 | | | | | | |
| 95 | 83 | 75 | | | | | | |
| 99 | 90 | 81 | | | | | | |

## Claims

1. Process for obtaining
a fertilizer composition comprising
(i) at least one nitrogen-containing fertilizer (F); and
(ii) a nitrification inhibitor (N) selected from the ammonium, diammonium, or potassium salt of 2-(3,4-dimethyl-1H-pyrazol-1-yl)succinic acid and/or 2-(4,5-dimethyl-1H-pyrazol-1-yl)succinic acid;
comprising the steps:
a) melting fertilizer (F), and/or providing a melt of fertilizer (F), and
b) adding the nitrification inhibitor (N) to the melt of fertilizer (F).

2. A process according to claim 1, wherein the nitrogen-containing fertilizer (F) is selected from the group consisting of ammonium nitrate, calcium ammonium nitrate, ammonium sulfate, ammonium sulfate nitrate, calcium nitrate, diammonium phosphate, monoammonium phosphate, ammonium thiosulfate, calcium cyanamide, NPK fertilizers, NK fertilizers, NP fertilizers, and urea.

3. A process according to claim 1, wherein the nitrogen-containing fertilizer (F) is ammonium sulfate nitrate.

4. A process according to claim 1, wherein the nitrogen-containing fertilizer (F) is an NPK fertilizer.

5. A process according to any one of claims 1 to 4, wherein the residence time of the nitrification inhibitor (N) in the melt of the nitrogen-containing fertilizer (F) is adjusted in such a way that at least 70 wt.-% of the nitrification inhibitor (N) as added in step b) is still present in the fertilizer composition.

6. A process according to any one of claims 1 to 4, wherein the residence time of the nitrification inhibitor (N) in the melt of the nitrogen-containing fertilizer (F) is not more than 15 minutes.

7. A process according to any one of claims 1 to 6, wherein the nitrogen-containing fertilizer (F) contains 10 to 100000 ppm by weight of the nitrification inhibitor (N).

8. A process according to any one of claims 1 to 6, wherein the nitrogen-containing fertilizer (F) contains 0.03 to 0.5 wt.-% of the nitrification inhibitor (N).

9. A process according to any one of the claims 1 to 8, further comprising after step b) the step c): solidifying the melt of the fertilizer (F) comprising the nitrification inhibitor (N).

10. A process according to any one of the claims 1 to 9, wherein an additional amount of liquid is added to the fertilizer (F) in the above step a).

11. A process according to claim 10, wherein the liquid is water.

12. A process according to claim 10 or 11, wherein the additional amount of liquid is 0.5 to 10 wt.-% relative to the total amount of the fertilizer (F).

## Patentansprüche

1. Verfahren zur Herstellung
einer Düngemittelzusammensetzung, umfassend
(i) mindestens ein stickstoffhaltiges Düngemittel (F) und
(ii) einen Nitrifikationsinhibitor (N) ausgewählt aus den Aammonium-, Diammonium- und Kaliumsalzen von 2-(3,4-Dimethyl-1H-pyrazol-1-yl)bernsteinsäure und/oder 2-(4,5-Dimethyl-1H-pyrazol-1-yl)bernsteinsäure,
welches die folgenden Schritte umfasst:
a) das Schmelzen von Düngemittel (F) und/oder die Bereitstellung einer Schmelze von Düngemittel (F) und
b) die Zugabe des Nitrifikationsinhibitors (N) zu der Schmelze von Düngemittel (F).

2. Verfahren nach Anspruch 1, wobei das stickstoffhaltige Düngemittel (F) aus der aus Ammoniumnitrat, Calciumammoniumnitrat, Ammoniumsulfat, Ammoniumsulfatnitrat, Calciumnitrat, Diammoniumphosphat, Monoammoniumphosphat, Ammoniumthiosulfat, Calciumcyanamid, NPK-Düngemitteln, NK-Düngemitteln, NP-Düngemitteln und Harnstoff bestehenden Gruppe ausgewählt ist.

3. Verfahren nach Anspruch 1, wobei es sich bei dem stickstoffhaltigen Düngemittel (F) um Ammoniumsulfatnitrat handelt.

4. Verfahren nach Anspruch 1, wobei es sich bei dem stickstoffhaltigen Düngemittel (F) um ein NPK-Düngemittel handelt.

5. Verfahren nach einem der Ansprüche 1 bis 4, wobei die Verweilzeit des Nitrifikationsinhibitors (N) in der Schmelze des stickstoffhaltigen Düngemittel (F) so eingestellt ist, dass mindestens 70 Gew.-% des wie in Schritt b) zugesetzten Nitrifikationsinhibitors (N) noch in der Düngemittelzusammensetzung vorhanden sind.

6. Verfahren nach einem der Ansprüche 1 bis 4, wobei die Verweilzeit des Nitrifikationsinhibitors (N) in der Schmelze des stickstoffhaltigen Düngemittel (F) nicht mehr als 15 Minuten beträgt.

7. Verfahren nach einem der Ansprüche 1 bis 6, wobei das stickstoffhaltige Düngemittel (F) 10 bis 100000 ppm nach Gewicht an Nitrifikationsinhibitor (N) enthält.

8. Verfahren nach einem der Ansprüche 1 bis 6, das stickstoffhaltige Düngemittel (F) 0,03 bis 0,5 Gew.-% Nitrifikationsinhibitor (N) enthält.

9. Verfahren nach einem der Ansprüche 1 bis 8, welches weiterhin nach Schritt b) den Schritt c) umfasst: das Verfestigen der den Nitrifikationsinhibitor (N) umfassenden Schmelze des Düngemittels (F).

10. Verfahren nach einem der Ansprüche 1 bis 9, wobei man dem Düngemittel (F) in dem obigen Schritt a) eine zusätzliche Menge an Flüssigkeit zufügt.

11. Verfahren nach Anspruch 10, wobei es sich bei der Flüssigkeit um Wasser handelt.

12. Verfahren nach Anspruch 10 oder 11, wobei die zusätzliche Menge an Flüssigkeit 0,5 bis 10 Gew.-%, bezogen auf die Gesamtmenge an Düngemittel (F), beträgt.

## Revendications

1. Procédé d'obtention
d'une composition d'engrais comprenant
(i) au moins un engrais contenant de l'azote (F) ; et
(ii) un inhibiteur de nitrification (N) sélectionné parmi le sel d'ammonium, de diammonium ou de potassium d'acide 2-(3,4-diméthyl-1H-pyrazol-1-yl)succinique et/ou d'acide 2-(4,5-diméthyl-1H-pyrazol-1-yl)succinique ;
comprenant les étapes :
a) fusion de l'engrais (F) et/ou fourniture d'une masse fondue d'engrais (F), et
b) ajout de l'inhibiteur de nitrification (N) à la masse fondue d'engrais (F).

2. Procédé selon la revendication 1, dans lequel l'engrais contenant de l'azote (F) est sélectionné dans le groupe constitué par le nitrate d'ammonium, le nitrate d'ammonium et de calcium, le sulfate d'ammonium, le nitrate de sulfate d'ammonium, le nitrate de calcium, le phosphate de diammonium, le phosphate de monoammonium, le thiosulfate d'ammonium, le cyanure de calcium, les engrais NPK, les engrais NK, les engrais NP et l'urée.

3. Procédé selon la revendication 1, dans lequel l'engrais contenant de l'azote (F) est le nitrate de sulfate d'ammonium.

4. Procédé selon la revendication 1, dans lequel l'engrais contenant de l'azote (F) est un engrais NPK.

5. Procédé selon l'une quelconque des revendications 1 à 4, dans lequel le temps de séjour de l'inhibiteur de nitrification (N) dans la masse fondue de l'engrais contenant de l'azote (F) est ajusté de manière à ce qu'au moins 70 % en poids de l'inhibiteur de nitrification (N) tel qu'ajouté à l'étape b) est encore présent dans la composition d'engrais.

6. Procédé selon l'une quelconque des revendications 1 à 4, dans lequel le temps de séjour de l'inhibiteur de nitrification (N) dans la masse fondue de l'engrais contenant de l'azote (F) n'est pas supérieur à 15 minutes.

7. Procédé selon l'une quelconque des revendications 1 à 6, dans lequel l'engrais contenant de l'azote (F) contient 10 à 100 000 ppm en poids de l'inhibiteur de nitrification (N).

8. Procédé selon l'une quelconque des revendications 1 à 6, dans lequel l'engrais contenant de l'azote (F) contient 0,03 à 0,5 % en poids de l'inhibiteur de nitrification (N).

9. Procédé selon l'une quelconque des revendications 1 à 8, comprenant en outre après l'étape b) l'étape c) : solidification de la masse fondue de l'engrais (F) comprenant l'inhibiteur de nitrification (N).

10. Procédé selon l'une quelconque des revendications 1 à 9, dans lequel une quantité supplémentaire de liquide est ajoutée à l'engrais (F) à l'étape a) ci-dessus.

11. Procédé selon la revendication 10, dans lequel le liquide est de l'eau.

12. Procédé selon la revendication 10 ou 11, dans lequel la quantité supplémentaire de liquide est de 0,5 à 10 % en poids par rapport à la quantité totale de l'engrais (F) .
